# EUROPÄISCHE PATENTSCHRIFT

(11) **EP 0 615 110 B1**
(45) Veröffentlichungstag und Bekanntmachung des Hinweises auf die Patenterteilung: **16.04.1997**
(21) Anmeldenummer: 93103970.5
(22) Anmeldetag: 11.03.1993
(51) Int. Cl.: G01B 21/04, B25J 18/00, B25J 19/00

(54) **MOBILE KOORDINATENMESSMASCHINE UND KALIBRIERVERFAHREN**
MOBILE COORDINATE MEASURING MACHINE AND CALIBRATING METHOD
MACHINE MOBILE MESURANTE DES COORDONNEES ET METHODE CALIBRER

(43) Veröffentlichungstag der Anmeldung: 14.09.1994
(73) Patentinhaber: INSTITUT FÜR FERTIGUNGSTECHNIK DER TU GRAZ, A-8010 Graz (AT)
(72) Erfinder: Kovac, Igor Dipl.-Ing. Dr., SI-61000 Ljubljana (SI)

(56) Entgegenhaltungen:
- WO-A-88/04404
- DE-A- 2 515 944
- GB-A- 2 166 266
- US-A- 4 240 205
- US-A- 4 474 047
- US-A- 4 505 049
- Proceedings 1983 American Control Conference, Sheraton-Palace Hotel San Francisco, CA, US, June 22-24, pp. 497-502, vol. 2, 'The Kinematic Error Model for the Design of Robot Manipulator'

## Beschreibung

Die Erfindung bezieht sich auf eine mobile Koordinatenmeßmaschine gemäß dem Oberbegriff des Anspruches 1.

Derartige Meßvorrichtungen sind bekannt. Beispielsweise wird in der DE 25 15 944 C2 eine Meßvorrichtung beschrieben, die in fünf Achsen beweglich ist und ausschließlich Winkel mißt. Aus den fünf Schwenkwinkeln, die sich in der Meßstellung ergeben, wird die räumliche Lage des Meßpunktes in dem Bezugssystem ermittelt.

Zur Ermittlung der Bezugslage ist dort ein Bezugsoder Eichzylinder vorgesehen, der in Bezug auf das Bezugskoordinatensystem eine feste Lage und Orientierung hat. Wenn der Meßkopf des dort beschriebenen Gerätes mit der Außenfläche des Eichzylinders in Eingriff steht, ist der Bezugswert ermittelt.

Eine ähnliche Vorrichtung ist in der WO-A-88/04404 beschrieben. Dort wird die Kalibrierung durch mehrmaliges Antasten von bestimmten Meßpositionen an einem Meßnormal vorgenommen.

In dem Bericht Proceedings 1983 American Control Conference, Sheraton-Palace Hotel San Francisco, California, U.S.A June 22-24 1983, pages 497-502, vol 2 "The Kinematic Error Model for the Design of Robot Manipulator" wird eine Fehlerkompensation mit Hilfe eines mathematischen Modelles eines Roboter-Manipulators abgehandelt.

In der US-A-4,505,049 ist ein Roboter beschrieben, bei dem die korrekte Bezugslage der Achsen, hinsichtlich auf die Bezugsfläche des Roboters, mit Hilfe von Richtwaagen eingestellt wird, die in geeigneter Weise den einzelnen Achsen zugeordnet sind.

In der US-A-4,240,205 ist ein Koordinaten-Meßgerät beschreiben, welches an seinen Auslegern Gegengewichte aufweist.

In der US-A-4,474,047 ist ein Roboter beschrieben, bei dem in der Eichstellung die mechanischen und die meßtechnischen Nullpunkte zusammenfallen. Der mechanische Nullpunkt ist durch das Zusammenwirken von einem Stift an einem Element mit einem Schlitz an einem weiteren, relativ zum ersten Element drehbaren Element definiert.

In der GB-A-2 166 266 ist eine Koordinaten-Meßmaschine beschrieben, die zum Vermessen von Werkstücken eine Roboter-Mechanik aufweist.

Bei derartigen Meßvorrichtungen muß zwischen Wiederholgenauigkeit und Absolutgenauigkeit unterschieden werden. Wird mit dem Meßgerät dieselbe - also die Bezugsposition - mehrmals angefahren, so werden die Meßwerte innerhalb eines Streubereiches liegen. Dieser Streubereich ist ein Charakteristikum für die zufälligen Fehler und ein Maßstab für die Wiederholgenauigkeit. Eine Verbesserung der Wiederholgenauigkeit über Software-Maßnahmen ist nicht möglich. Die Absolutgenauigkeit des Meßgerätes wird durch die systematischen Fehler bestimmt. Wenn diese bekannt sind, kann die Absolutgenauigkeit durch Software-Maßnahmen verbessert werden. Über die Absolutgenauigkeit ist allerdings in den genannten Dokumenten nichts ausgesagt. Die Trennung der zufälligen Fehler von den systematischen Fehlern ist daher generell von entscheidender Bedeutung. In der Praxis können beachtliche Unterschiede zwischen Wiederholgenauigkeit und Absolutgenauigkeit auftreten. Untersuchungen an Industrierobotern haben gezeigt, daß ein wesentlicher Anteil der Fehler systematischer Art ist.

Die bisher bekannten Vorschläge auf diesem Gebiet zeigen, daß es zwar interessante Ansätze gibt, allerdings existiert noch kein robotergerechtes Meßsystem, das meßtechnische Aufgaben innerhalb eines Fertigungssystemes zufriedenstellend erfüllen kann.

Aufgabe der Erfindung ist es, ein Meßinstrument zu entwickeln, das imstande ist, unterschiedliche Meßaufgaben zu erfüllen. Im Vordergrund stehen dabei das Messen von Werkstücken händisch beziehungweise in Kombination mit einem Industrieroboter und das Vermessen von Industrierobotern.

Diese Aufgabe wird von einer Meßvorrichtung mit den Merkmalen des Anspruches 1 gelöst.

Vorteilhafte Ausgestaltungen entnimmt man den abhängigen Ansprüchen.

Die Vorteile der erfindungsgemäßen Meßvorrichtung liegen darin, daß sie so aufgebaut ist, daß eine Kalibrierung in mehreren Stufen erfolgen kann und direkt an den Achsen erfolgt. Bei den bekannten Methoden ist es hingegen charakteristisch, daß die Messungen durch reine Positionsmessungen am EndEffektor des Roboters in verschiedenen Stellungen mit einem externen Meßgerät durchgeführt werden. Dabei hängt die Kalibrierung sehr stark von der Genauigkeit des externen Meßsystems ab. Ferner ist es mit dieser Meßvorrichtung möglich, gleichzeitig Position und Orientierung am Endeffektor eines Industrieroboters zu messen.

Die Kalibrierstufen sind
1 Ausrichtung am Meßplatz
2 Einsetzung in die Referenz-Position und Ermitteln der Offsetwerte
3 Vermessung der räumlichen Lagen der Achsen
4 Vermessung der richtigen Längen
5 Achstaumelmessung
6 Messung der Elastizität einzelner Gelenke
7 Parameter-Hinterlegung in die Betriebs-Software

Mit Hilfe von Zeichnungen soll anhand eines Ausführungsbeispieles die Erfindung näher erläutert werden.

Es zeigt
- Figur 1: eine Darstellung des Mechanismus der Meßvorrichtung;
- Figur 2: eine symbolisierte Darstellung der Meßvorrichtung;
- Figur 3: eine Gelenkachse im Schnitt;
- Figur 4: eine Seitenansicht der Meßvorrichtung und
- Figur 5: die Meßvorrichtung im Meßeinsatz.

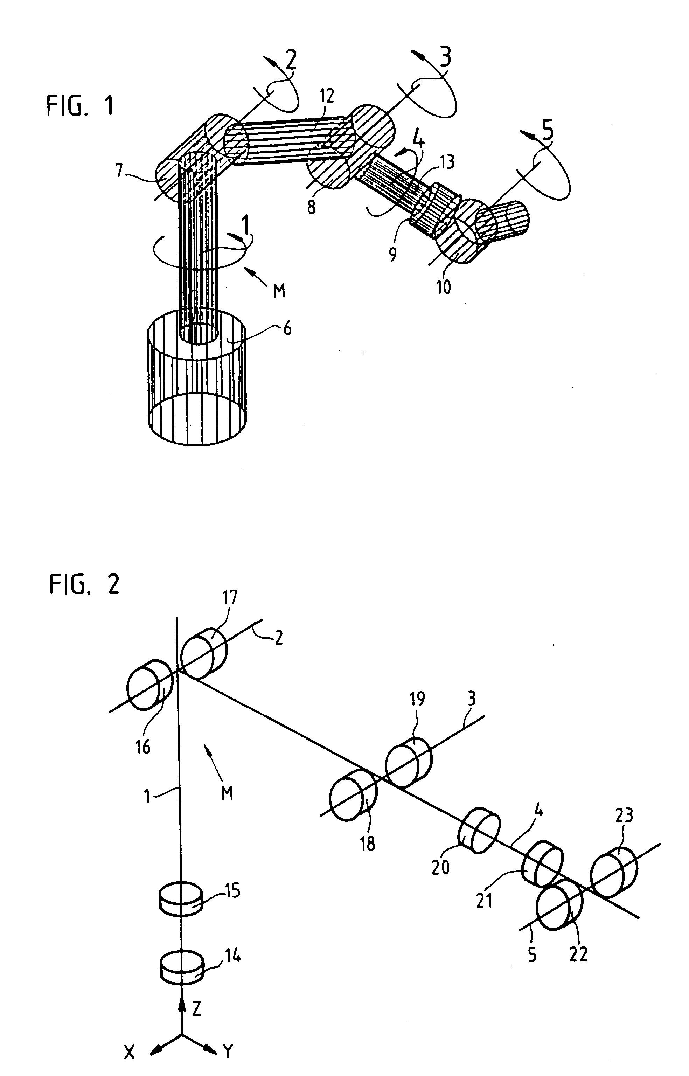

Figur 1 zeigt schematisch den mechanischen Aufbau einer Meßvorrichtung M, dessen Hauptaufgaben Werkstückgeometriemessung und Vermessungen von Industrierobotern sind. Hierbei handelt es sich um eine mechanische Vorrichtung M mit mehreren Achsen 1, 2, 3, 4, 5. In den Gelenken 6, 7, 8, 9, 10 befinden sich nichtdargestellte Winkelmeßgeräte, mit welchen Position und Orientierung erfaßt werden können. Die Meßvorrichtung M besitzt keine Antriebe. Eine bestimmte Position wird händisch oder durch einen angekoppelten Industrieroboter angefahren, wie später noch anhand von Figur 4 erläutert wird. Bei der Verwendung der Meßvorrichtung M für die Werkstückgeometriemessung wird die Meßvorrichtung M mit einem schaltenden Taster ausgerüstet. Mit dem Triggerimpuls des Tasters müssen alle Achspositionswerte gleichzeitig erfaßt und gespeichert werden. Die Berechnung und Darstellung des Meßergebnisses in einem dreiachsigen, rechtwinkeligen Koordinatensystem mit den kartesischen Koordinaten X, Y, Z erfordert ein ausgefeiltes mathematisches Modell.

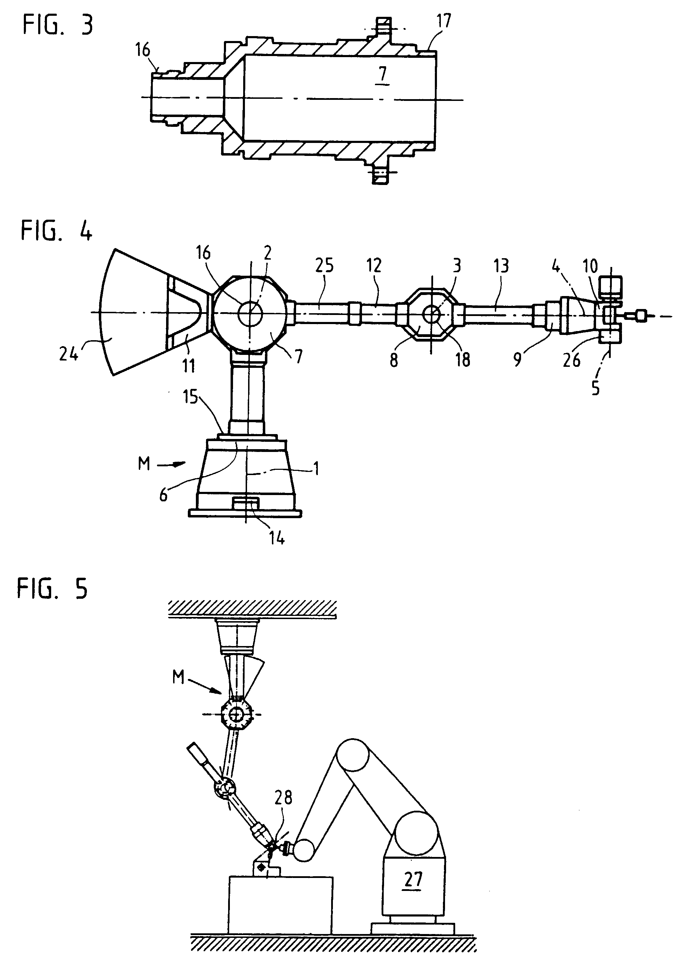

Die Meßvorrichtung M besteht aus Gelenken 6, 7, 8, 9, 10 und Verbindungs-Elementen (Segmenten) 11, 12, 13 und weist mehrere rotatorische Achsen 1, 2, 3, 4, 5 auf. Diese bilden eine offene kinematische Kette. Zur Berechnung der Tasterposition in kartesischen Koordinaten werden geeignete mathematische Beziehungen aus der Theorie der Roboterkinematik übernommen. Die Konstruktion der mechanischen Struktur ist schon durch die Kinematik festgelegt. Eine günstige und starre Konstruktion der mechanischen Struktur ergibt sich, wenn die Anzahl der Werkstückkomponenten möglichst gering ist. Große Anforderungen werden an die Gelenke 6, 7, 8, 9, 10 gestellt, die leicht, steif, thermisch symmetrisch und kalibriergerecht konstruiert werden müssen. Auf der anderen Seite wird die Größe der Gelenke 6, 7, 8, 9, 10 durch die Größe der ausgewählten Winkelmeßgeräte und die Lagerung bestimmt. Die konstruktive Gestaltung jedes Gelenkes 6, 7, 8, 9, 10 wird durch die Art der Anbringung des Winkelmeßgerätes, sowie durch die ausgewählte Lagerausführung gegeben, wie in Figur 3 gezeigt ist.

Eine Verringerung des Gewichtes kann in erster Linie durch die Wahl geeigneter Werkstoffe erreicht werden. Deswegen werden alle Gelenke 6, 7, 8, 9, 10 aus einer Al-Legierung, bzw. die Gelenkverbindungen aus CFK hergestellt. Die gleiche Konstruktion aus Stahl wäre etwa doppelt so schwer. Die Gelenke 6, 7, 8, 9, 10 werden sämtlich als Hohlachsen ausgeführt, wodurch sich außerdem eine gute Durchführung der Kabelspiralen ergibt, wie aus Figur 3 ersichtlich ist.

Nach der Montage, muß die Meßvorrichtung M kalibriert werden. Das bedeutet, daß zuerst alle Achsen 1, 2, 3, 4, 5 in die richtige Referenz-Position zu stellen und danach alle geometrischen Abweichungen zu ermitteln sind. Diese Referenzposition ist in Figur 4 dargestellt. Um die Kalibrierung präzise und schnell durchführen zu können, müssen die Achsen 1, 2, 3, 4, 5 an Kalibrierflächen 14 bis 23 physisch antastbar sein. Diese Forderung muß schon bei der Konstruktion der Drehgelenke, besonders aber bei der Anordnung der Achsen berücksichtigt werden.

Grundsätzlich sollen die Kalibrierflächen 14 bis 23 und die jeweilige Drehachse 1, 2, 3, 4, 5 exakt konzentrisch liegen, was in der symbolischen Darstellung aus Figur 2 gezeigt ist. Trotz der Bearbeitung von Lagersitz und Kalibrierfläche 14 bis 23 in derselben Aufspannung, sind Exzentrizitäten zwischen Kalibrierfläche 14 bis 23 und tatsächlicher Lagerachse 1, 2, 3, 4, 5 nicht von vornherein auszuschließen. Deswegen müssen die Kalibrierflächen 14 bis 23 auf einem Rundheitsmeßgerät vermessen und dann als zusätzliche Abweichungen bei der Parameter-Hinterlegung berücksichtigt werden.

Jede Achse eines Gelenkmechanismus besitzt eine maschinenfeste Referenz-Position, was auch für die Achsen 1, 2, 3, 4, 5 der Meßvorrichtung M gilt. Im Falle eines Gelenkmechanismus sind dies die Referenzpunkte der Winkelmeßsysteme in den Gelenken 6, 7, 8, 9, 10. Bei Verwendung von absoluten Winkelmeßgeräten ist dieser Referenzpunkt durch die codierte Null automatisch gegeben.

Im allgemeinen kommen heute jedoch digital-inkrementale Drehgeber zum Einsatz. Hier übernimmt die auf der Teilscheibe angeordnete Referenzmarke (Referenzimpuls) die Funktion des Systemnullpunktes. Analog zu einer CNC-Maschine müssen auch bei jeder Inbetriebnahme eines Gelenkmechanismus - wie auch bei der Meßvorrichtung M - zunächst die Referenzmarken in allen Achsen 1, 2, 3, 4, 5 überfahren werden.

Die Referenz-Position eines Gelenkmechanismus entspricht der Referenz-Position der Meßvorrichtung M und ist eine bevorzugte Achs-Konfiguration. Die Referenzpunkte der Meßsysteme der Achsen 1, 2, 3, 4, 5 decken sich im allgemeinen nicht mit der mathematisch bestimmten Referenz-Position. Bei der Kalibrierung stellt sich somit die Aufgabe, den Winkel zwischen Referenzmarke auf der Teilscheibe und der Referenz-Position für jede Achse 1, 2, 3, 4, 5 möglichst genau zu bestimmen. Dieser Winkelwert ist der Offsetwert.

Untersuchungen an Geräten mit Gelenkmechanismen haben gezeigt, daß das Einfahren in die richtige Referenz-Position eine der wichtigsten Maßnahmen der Kalibrierung ist. Um eine gute absolute Genauigkeit im gesamten Arbeitsraum zu erreichen, muß die im mathematischen Modell angenommene Referenz-Position und die tatsächliche Referenz-Position möglichst genau übereinstimmen.

Die neue Meßvorrichtung M wurde so konstruiert, daß ein präzises Einfahren in die Referenz-Position leicht durchgeführt werden kann. Jede Achse hat zwei Lagersitze und zwei Kalibrierflächen wie aus Figur 3 ersichtlich ist.

In Figur 4 ist dargestellt, wie Gegengewichte 24, 25, 26 zum Eigengewichtsausgleich an den einzelnen Segmenten angebracht sein können.

Die Gelenke 6, 7, 8, 9, 10 und Segmente sind aus leichten Materialen hergestellt und so konstruiert, daß möglichst viel an Gewicht eingespart wird. Kinematisch ist der Mechanismus als offene Kette aufgebaut. Das bedeutet, daß die einzelnen Achsen 1, 2, 3, 4, 5 des Mechanismus keine Stützpunkte haben und der Mechanismus unter dem Eigengewicht der Elemente schlaff zusammenknicken würde. Damit wäre eine manuelle Bedienung aber unmöglich.

Die einzelnen Segmente sind auf Biegung beansprucht. Die daraus resultierenden Verformungen sind von der Gerätestellung abhängig und müssen softwaremäßig kompensiert werden. Die Software-Kompensation vereinfacht sich, wenn bei der Auslegung der mechanischen Struktur gezielt darauf geachtet wird, daß sich die Massen-Schwerpunkte in den Drehachsen der Gelenke befinden und sich während der Bewegung nicht ändern. Es muß auch berücksichtigt werden, daß sich das Gewicht und damit die Massen-Schwerpunkte durch die Anbringung der unterschiedlichen Taster- bzw. Verbindungs-Anordnungen ändern können.

Zur Lösung des passiven Gewichtausgleiches wurde die in Figur 4 gezeigte Variante mit Gegengewichten 24, 25, 26 gewählt. An jedem horizontalen Segment ist ein Gegengewicht 24, 25, 26 angebracht, wobei von besonderem Vorteil ist, daß die Gegengewichte 24, 25, 26 integrale Bestandteile des jeweiligen Segmentes sind.

Trotz genauer Fertigung summieren sich die Ist-Abweichungen durch die Anzahl der in einem Gelenk 6, 7, 8, 9, 10 wirkenden Fehlerkomponenten . Als Ergebnis bekommt man eine Drehachse 1, 2, 3, 4, 5, die nicht mehr exakt, sondern exzentrisch läuft und/oder taumelt.

Je größer die Entfernung des betrachteten Gelenkes zur Spitze des Mechanismus ist, desto größer ist der Fehlereinfluß. Deswegen wirkt sich ein Taumelfehler unterschiedlich aus. Für die exakte Bestimmung des Achstaumelns sind präzise Messungen der Laufgenauigkeit einzelner Gelenkachsen im montierten Zustand notwendig.

Als Bezugsmeßflächen werden auch für diese Messungen die Kalibrierflächen 14 bis 23 der Drehachsen 1, 2, 3, 4, 5 vorgenommen.

Wenn die Meßvorrichtung M für die Vermessung des Industrieroboters 27 eingesetzt wird, braucht man für die kollisionsfreie Bewegung alle sechs Freiheitsgrade, was mit mindestens sechs Achsen erreicht werden kann. Das bedingt eine zusätzliche Achse mit Lagerpaar und Einbau eines zusätzlichen Winkelmeßgerätes. Wenn sich diese Achse auf dem Meßgerät befinden soll, wird die Gesamtkonstruktion des Gerätes, in erster Linie wegen Größe und Gewicht des Winkelmeßgerätes, schwerer, komplizierter, elastischer und von der erzielbaren Genauigkeit her schlechter. Aus diesen Gründen wurde die sechste Drehachse mit einer Koppelvorrichtung 28 verbunden. Ein Winkelmeßsystem der zusätzlichen Achse kann dann inner- oder außerhalb der Vorrichtung eingesetzt werden.

Mit der Meßvorrichtung können alle bei Industrierobotern 27 vorgeschriebene Messungen schnell und am Arbeitsplatz des Roboters durchgeführt werden. Für die Messung der Absolutgenauigkeit sind lediglich die entsprechenden Roboter-Programme auszuarbeiten. Als besonderer Vorteil ist herauszustreichen, daß die gesamte Abnahmeprüfung eines Roboters am Arbeitsplatz des Roboters durchgeführt werden kann. Die neue Meßvorrichtung kann als mobile Koordinatenmeßmaschine mit besonderer Eignung zur Robotervermessung gesehen werden.

In Figur 5 ist die Messung eines Werkstückes mit Hilfe eines Industrieroboters 27 als eines der Anwendungsgebiete der Meßvorrichtung M dargestellt.

Bei der vorbeschriebenen Problematik beim Messen mit dem Industrieroboter bzw. Vermessen des Industrieroboters stehen die neue Meßvorrichtung M und der Industrieroboter 27 als Meßgeräteträger im Vordergrund. Bei diesem flexiblen, robotergerechten Meßkonzept dient der Roboter nur zum Positionieren der erfindungsgemäßen Meßvorrichtung. Bei der stückgeometriemessung ist die Meßvorrichtung M mit einem elektronischen Taster ausgerüstet, um eine Messung in der Werkstück-Aufspannung, auf einer Palette oder auf einem Meßplatz durchzuführen. Wenn man die Meßvorrichtung M und den Roboter 27 verbindet, können Kenngrößen gemäß ISO 9283 rasch und automatisch am Arbeitsplatz des Roboters bestimmt werden. Statt mit dem Roboter eine Werkstückgeometriemessung zu realisieren, ist die Meßvorrichtung M ohne weiteres auch als händisch bedientes Meßgerät zu verwenden.

## Patentansprüche

1. Mobile Koordinatenmeßmaschine, die aus Gelenken und Verbindungselementen zusammengesetzt ist und mehrere rotatorische Achsen aufweist, wobei an den Gelenken Winkelmeßeinrichtungen vorhanden sind, dadurch gekennzeichnet, daß zur Kalibrierung der Meßvorrichtung (M) die Gelenke (6, 7, 8, 9, 10) jeweils wenigstens eine Kalibrierfläche (14 bis 23) mit mehreren Kalibrierorten aufweisen, die koaxial zur Mittelachse der Gelenke (6, 7, 8, 9, 10), in Achsrichtung hintereinander angeordnet und von Sensoren antastbar sind.

2. Meßvorrichtung nach Anspruch 1, dadurch gekennzeichnet, daß in den Verbindungs-Elementen (11, 12, 13) Gegengewichte (24, 25, 26) integriert sind.

3. Mobile Koordinatenmeßmaschine nach Anspruch 1, dadurch gekennzeichnet, daß die Verbindungselemente (11, 12, 13) mit ihren Gelenken (6, 7, 8, 9, 10) eine offene kinematische Kette bilden.

4. Mobile Koordinatenmeßmaschine nach Anspruch 1, dadurch gekennzeichnet, daß sich die Massen-Schwerpunkte der Achsen (1, 2, 3, 4, 5) in den Drehpunkten der Gelenke (6, 7, 8, 9, 10) befinden.

5. Mobile Koordinatenmeßmaschine nach Anspruch 1, dadurch gekennzeichnet, daß die Gelenke (6, 7, 8, 9, 10) mit Hohlachsen ausgeführt sind.

6. Mobile Koordinatenmeßmaschine nach Anspruch 1, dadurch gekennzeichnet, daß sie mindestens sechs Achsen aufweist.

7. Mobile Koordinatenmeßmaschine nach Anspruch 6, dadurch gekennzeichnet, daß sie mittels einer Koppelvorrichtung (28) mit einem Industrieroboter (27) verbunden ist.

8. Mobile Koordinatenmeßmaschine nach Anspruch 1, dadurch gekennzeichnet, daß sie mit einem Taster ausgerüstet ist.

9. Mobile Koordinatenmeßmaschine nach Anspruch 6 oder 7, gekennzeichnet durch die Verwendung zur Vermessung von Industrierobotern.

10. Mobile Koordinatenmeßmaschine nach Anspruch 7, gekennzeichnet durch Verwendung zur Vermessung von Werkstücken.

11. Mobile Koordinatenmeßmaschine nach Anspruch 8, gekennzeichnet durch die Verwendung zur automatischen oder händischen Vermessung von Werkstücken.

12. Kalibrierverfahren für eine mobile Koordinatenmeßmaschine nach Anspruch 1, dadurch gekennzeichnet, daß zur Ermittlung geometrischer Abweichungen in einer Referenz-Position eine Antastung von Kalibrierflächen (14 bis 23) erfolgt.

13. Kalibrierverfahren für eine mobile Koordinatenmeßmaschine nach Anspruch 11, dadurch gekennzeichnet, daß die Kalibrierflächen (14 bis 23) vermessen werden.

14. Kalibrierverfahren für eine mobile Koordinatenmeßmaschine nach Anspruch 11, dadurch gekennzeichnet, daß die bei der Vermessung ermittelten Parameter in der Betriebs-Software hinterlegt werden.

## Claims

1. A mobile coordinate measuring machine which is composed of joints and connecting elements and has a plurality of rotational axes, wherein angle measuring devices are provided at the joints, characterized in that the joints (6, 7, 8, 9, 10) each have at least one calibration surface (14 to 23) with a plurality of calibrating locations for calibrating the measuring device (M), which surfaces are arranged one behind the other in the axial direction, coaxial with the central axis of the joint (6, 7, 8, 9, 10) and which can be sensed by sensors.

2. A measuring apparatus according to claim 1, characterized in that counterweights (24, 25, 26) are integrated in the connecting elements (11, 12, 13).

3. A mobile coordinate measuring machine according to claim 1, characterized in that the connecting elements (11, 12, 13) with their joints (6, 7, 8, 9, 10) form an open kinematic chain.

4. A mobile coordinate measuring machine according to claim 1, characterized in that the mass centroids of the axes (1, 2, 3, 4, 5) are located in the points of rotation of the joints (6, 7, 8, 9, 10).

5. A mobile coordinate measuring machine according to claim 1, characterized in that the joints (6, 7, 8, 9, 10) are implemented with hollow axles.

6. A mobile coordinate measuring machine according to claim 1, characterized in that it has at least six axes.

7. A mobile coordinate measuring machine according to claim 6, characterized in that it is connected to an industrial robot (27) by a coupling device (28).

8. A mobile coordinate measuring machine according to claim 1, characterized in that it is equipped with a sensor.

9. A mobile coordinate measuring machine according to claim 6 or 7, characterized by use for measuring industrial robots.

10. A mobile coordinate measuring machine according to claim 7, characterized by use for measuring workpieces.

11. A mobile coordinate measuring machine according to claim 8, characterized by use for automatic or manual measurement of workpieces.

12. A method of calibrating a mobile coordinate measuring machine according to claim 1, characterized in that sensing of calibration surfaces (14 to 23) is effected in order to determine geometrical deviations in a reference position.

13. A method of calibrating a mobile coordinate measuring machine according to claim 11, characterized in that the calibration surfaces (14 to 23) are measured.

14. A method of calibrating a mobile coordinate measuring machine according to claim 11, characterized in that the parameters determined in the measurement are entered in the operating software.

## Revendications

1. Machine mobile de mesure par coordonnées qui comprend des articulations et des éléments de liaison et présente plusieurs axes de rotation, des dispositifs de mesure d'angles étant prévus au niveau des articulations, caractérisée par le fait que, à des fins d'étalonnage du dispositif de mesure (M) , les articulations (6, 7, 8, 9, 10) sont pourvues chacune d'au moins une surface d'étalonnage (14 à 23) avec plusieurs points d'étalonnage qui sont disposés l'un derrière l'autre dans la direction de l'axe, coaxialement à l'axe médian des articulations (6, 7, 8, 9, 10) et peuvent être palpés par des détecteurs.

2. Dispositif de mesure selon la revendication 1, caractérisé par le fait que des contre-poids (24, 25, 26) sont intégrés dans les éléments de liaison (11, 12, 13).

3. Machine mobile de mesure par coordonnées selon la revendication 1, caractérisée par le fait que les éléments de liaison (11, 12, 13), avec leurs articulations (6, 7, 8, 9, 10), forment une chaîne cinématique ouverte .

4. Machine mobile de mesure par coordonnées selon la revendication 1, caractérisée par le fait que les centres de gravité des masses des axes (1, 2, 3, 4, 5) sont situés aux points de rotation des articulations (6, 7, 8, 9, 10).

5. Machine mobile de mesure par coordonnées selon la revendication 1, caractérisée par le fait que les articulations (6, 7, 8, 9, 10) sont pourvues d'axes creux.

6. Machine mobile de mesure par coordonnées selon la revendication 1, caractérisée par le fait qu'elle comporte au moins six axes.

7. Machine mobile de mesure par coordonnées selon la revendication 6, caractérisée par le fait qu'elle est liée à un robot (27) industriel à l'aide d'un dispositif de couplage (28).

8. Machine mobile de mesure par coordonnées selon la revendication 1, caractérisée par le fait qu'elle est pourvue d'un palpeur

9. Machine mobile de mesure par coordonnées selon la revendication 6 ou 7, caractérisée par l'utilisation pour la mesure de robots industriels.

10. Machine mobile de mesure par coordonnées selon la revendication 7, caractérisée par l'utilisation pour la mesure de pièces mécaniques.

11. Machine mobile de mesure par coordonnées selon la revendication 8, caractérisée par l'utilisation pour la mesure automatique ou manuelle de pièces mécaniques.

12. Procédé d'étalonnage pour une machine mobile de mesure par coordonnées selon la revendication 1, caractérisé par le fait que pour déterminer des écarts géométriques dans une position de référence, on procède à un palpage de surfaces d'étalonnage (14 à 23).

13. Procédé d'étalonnage pour une machine mobile de mesure par coordonnées selon la revendication 11, caractérisé par le fait que l'on mesure les surfaces d'étalonnage (14 à 23).

14. Procédé d'étalonnage pour une machine mobile de mesure par coordonnées selon la revendication 11, caractérisé par le fait que les paramètres déterminés lors de la mesure sont intégrés au logiciel d'exploitation.
